Europäisches Patentamt

European Patent Office

Office européen des brevets

(19)

(11) Numéro de publication : **0 396 568 B1**

(12) **FASCICULE DE BREVET EUROPEEN**

(45) Date de publication du fascicule du brevet :
**29.01.92 Bulletin 92/05**

(51) Int. Cl.⁵ : **G01L 5/16**

(21) Numéro de dépôt : **88910057.4**

(22) Date de dépôt : **14.11.88**

(86) Numéro de dépôt international :
**PCT/FR88/00559**

(87) Numéro de publication internationale :
**WO 89/04469 18.05.89 Gazette 89/11**

(54) **PROCEDE DE REALISATION DE CAPTEURS DE MESURE D'EFFORTS SPATIAUX ET CAPTEURS OBTENUS.**

(30) Priorité : **13.11.87 FR 8716134**

(43) Date de publication de la demande :
**14.11.90 Bulletin 90/46**

(45) Mention de la délivrance du brevet :
**29.01.92 Bulletin 92/05**

(84) Etats contractants désignés :
**AT BE CH DE FR GB IT LI LU NL SE**

(56) Documents cités :
**EP-A- 0 156 073**
**US-A- 4 094 192**
**US-A- 4 196 337**
**Patent Abstracts of Japan, volume 11, no. 260 (p-608)(2707),22 August 1987, & JP, A, 6263827**
**Soviet Invention Illustrated, semaine 8619, publié le 23 mai 1986,Derwent Publications Ltd, (Londres,GB),& SU, A, 1185128 (ENGINEE-RING SCI INS) 15 octobre 1985**

(73) Titulaire : **LOGABEX S.A.R.L.**
**Centre d'Innovations Industrielles 3, avenue Didier-Daurat**
**F-31400 Toulouse (FR)**

(72) Inventeur : **CH'HAYDER, Ameur**
**9, rue de Rémusat**
**F-31000 Toulouse (FR)**
Inventeur : **DURAND, Didier Résidence "Grands Ramiers"**
**Allée C.- Soula - Bât. B**
**F-31400 Toulouse (FR)**
Inventeur : **DIAZ, Constantino**
**14, avenue de Lyon**
**F-31500 Toulouse (FR)**

(74) Mandataire : **Barre, Philippe**
**Cabinet Barre-Gatti-Laforgue 95 rue des Amidonniers**
**F-31069 Toulouse Cédex (FR)**

## Description

La présente invention concerne un procédé de réalisation de capteurs de mesure d'efforts spatiaux, c'est-à-dire de structures mécaniques rigides qui, lorsqu'elles sont interposées entre deux corps, permettent de mesurer le torseur de liaison entre ces deux corps, le torseur étant constitué des trois composantes de force et des trois composantes de moment exercés par un corps sur l'autre. Elle s'étend aux capteurs obtenus par la mise en oeuvre de ce procédé.

L'invention trouve une application dans les domaines de la robotique, de la machine-outil et d'une manière générale dans toute industrie lorsqu'il s'agit de mesurer les efforts et les couples transmis entre deux pièces.

Les principaux dispositifs connus de ce genre sont constitués de plusieurs pièces assemblées entre elles par des éléments de fixation, l'ensemble aboutissant à une réalisation mécanique complexe et exigeant une grande qualité de fabrication.

De tels capteurs sont notamment décrits dans les brevets SU 1.185.128, FR 2.529.333 et JP -A- 6 263827 visant des poignets de détection de six composantes d'effort, et les brevets EP O.156.073 et US 4.196.337 visant des poignets de détection de trois composantes d'effort.

Pour pallier ces inconvénients, un autre procédé a consisté à réaliser des capteurs de mesure de trois composantes de couple, tels que décrits dans le brevet US 4.094.192, comportant trois poutres et réalisés par enlèvement de matière à partir d'une pièce primitive unique. Toutefois, ce type de procédé a été limité, comme décrit dans le préambule du brevet US 4.196.337, à des capteurs dotés de trois ou quatre poutres.

La présente invention vise un capteur de ce type réalisé par enlèvement de matière à partir d'une pièce primitive unique et a pour objectif essentiel de fournir un capteur de mesure de trois composantes de force et trois composantes de moment permettant de réaliser des mesures très homogènes.

Un autre objectif est de fournir un capteur très compact permettant de mesurer des efforts élevés.

A cet effet, l'invention concerne un procédé de réalisation d'un capteur de mesure de trois composantes de force et trois composantes de moment, qui consiste:

– à usiner, par enlèvement de matière, une pièce mécanique se présentant sous la forme d'un manchon de section transversale de forme générale arrondie, doté d'une paroi périphérique d'une épaisseur donnée, de façon à obtenir, dans un premier temps, un manchon présentant, sur sa plus grande longueur, un tronçon central d'épaisseur inférieure à l'épaisseur initiale, et deux tronçons d'extrémité de même épaisseur que ladite épaisseur initiale,

– à évider dans un deuxième temps le tronçon central de façon à réaliser six poutres reliant les deux tronçons d'extrémité et présentant longitudinalement une forme d'hélice, lesdites poutres étant agencées selon une architecture triangulée fermée,

– et à doter chacune des six poutres de moyens de mesure de leur déformation.

L'invention permet donc de réaliser un capteur à partir d'une pièce primitive unique, par enlèvements de matière en des endroits prédéterminés de cette pièce. Ce procédé ne fait donc appel à aucun assemblage et permet, en outre, d'envisager la réalisation de capteurs de formes diverses, fonctions de la section de la pièce primitive : circulaire, hexagonale...

Outre son intérêt économique, un tel procédé permet en outre d'obtenir un capteur présentant des avantages primordiaux lors de son utilisation. En effet, le capteur réalisé présente une grande rigidité autorisant la mesure d'efforts élevés. De plus, les poutres étant parfaitement encastrées sur les faces d'extrémité et le capteur étant réalisé en une seule matière, ce dernier permet d'effectuer des mesures très homogènes.

De plus, la forme hélicoïdale des poutres permet de réaliser un capteur présentant une meilleure sensibilité car, grâce à leur courbure, les poutres sont soumises non seulement à des contraintes de traction-compression, mais également à des contraintes de flexion.

Par ailleurs, en fonction des applications, le capteur peut être réalisé, soit à partir d'un manchon droit, soit à partir d'un manchon coudé longitudinalement de façon à obtenir des tronçons d'extrémité parallèles ou s'étendant selon des plans sécants.

L'invention s'étend à un capteur obtenu par la mise en oeuvre de ce procédé et conforme à la revendication 4.

Ce capteur comprend donc une partie centrale composée de six poutres disposées suivant une architecture triangulée et deux faces d'extrémité comportant des moyens de fixation sur le corps engendrant forces et moments et sur le corps de référence. Il est ainsi constitué d'une seule pièce mécanique dont la réalisation ne fait appel à aucun assemblage.

Lors de l'utilisation de ce capteur, une face d'extrémité de celui-ci est fixée sur un corps engendrant les forces et moments et l'autre face d'extrémité sur un corps de référence. Les trois composantes de forces et de moments sont donc transmises d'un corps vers l'autre par l'intermédiaire du capteur et notamment de sa partie centrale en treillis.

L'application des trois composantes de force et de moment sur une face d'extrémité du capteur génère, du fait de l'agencement triangulé des six poutres, des forces s'exerçant au niveau de chacune des liaisons à encastrement de chaque poutre. Ces forces, ayant même intensité, et sens différents, provoquent la déformation des poutres.

Des moyens de mesure tels que des jauges de contrainte fixées dans la zone centrale de chaque poutre, délivrent un signal électrique fonction de la déformation de la poutre.

L'adaptation de ce capteur à une application donnée est réalisée par un choix adéquat des dimensions du corps du capteur ainsi que de la section, la longueur et l'inclinaison des poutres formant le treillis central.

Par ailleurs, la structure mécanique de ce capteur étant rigide, celui-ci peut mesurer des efforts élevés.

D'autres caractéristiques, buts et avantages de l'invention se dégageront de la description détaillée qui suit et de l'examen des dessins annexés qui en présentent, à titre d'exemple non limitatif, un mode de réalisation préférentiel. Sur ces dessins qui font partie intégrante de la présente description :

– la figure 1 est une vue en perspective du capteur,

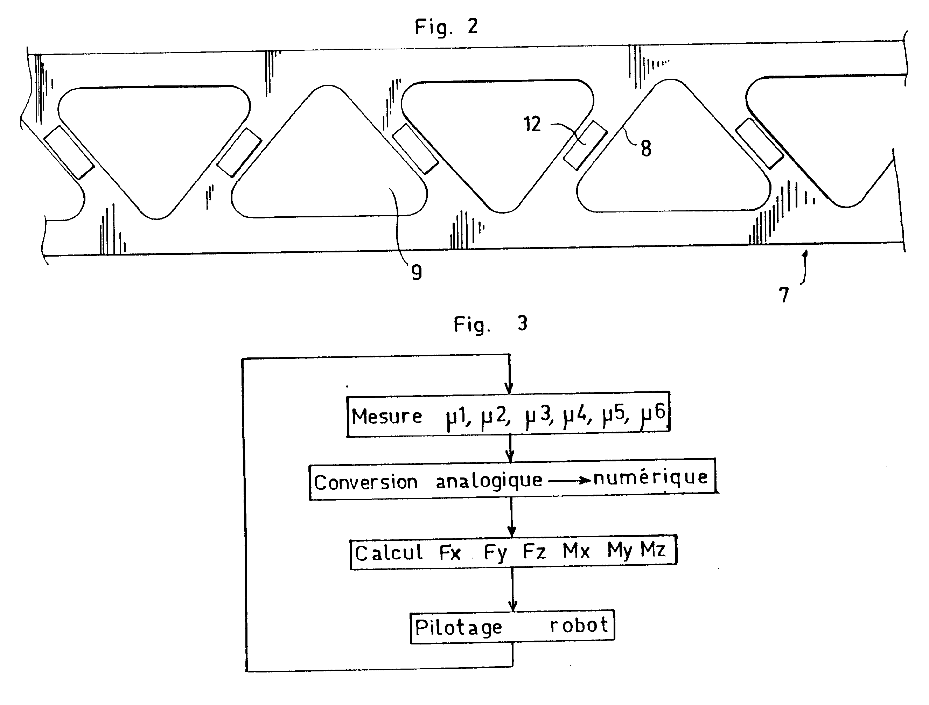

– la figure 2 en est une vue développée plane de la partie centrale de ce capteur,

– la figure 3 illustre un schéma fonctionnel de l'exploitation des mesures réalisées sur les six poutres du capteur.

– la figure 4 est une vue en perspective partielle, à une échelle agrandie, de la partie centrale de ce capteur,

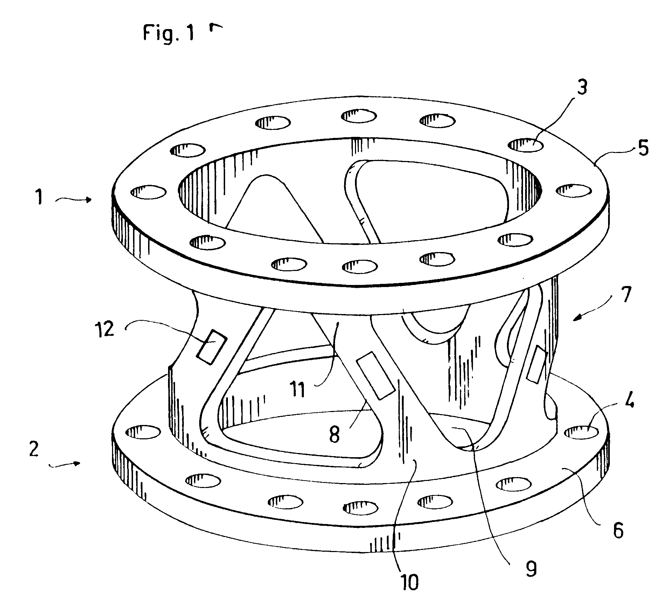

Le capteur représenté à la figure 1 est doté de deux faces d'extrémités 1 et 2 présentant la forme de couronnes 5, 6 permettant de le fixer aux corps entre lesquels doivent être mesurées les composantes de forces et de moments. Ces faces d'extrémités 1, 2 sont dotées de moyens de fixation, en l'exemple trous 3 et 4, ménagés axialement dans les couronnes 5, 6.

La partie centrale du capteur, de forme cylindrique, se présente sous la forme d'un treillis spatial 7 formé de poutres 8 solidarisées par des liaisons à encastrement 10, 11 aux faces d'extrémité 1, 2 et présentant longitudinalement une forme d'hélice. Ces poutres 8 sont réalisées par enlèvement de matière en des endroits 9 de cette partie centrale du capteur. Elles sont réparties uniformément autour de l'axe principal du capteur et disposées suivant une architecture angulée fermée de façon à s'étendre depuis trois zones distinctes d'une des faces d'extrémité 1 du capteur jusqu'à trois zones distinctes de l'autre face d'extrémité 2 décalées axialement de 60° par rapport aux trois zones précitées.

Les composantes des forces et moments exercés sur une face d'extrémité 1, 2 du capteur engendrent des forces antagonistes entre les deux zones de liaison 10, 11 de chaque poutre 8 et déforment par conséquent celles-ci.

La déformation est mesurée sur chaque poutre 8 par une jauge de contrainte 12 qui délivre un signal électrique fonction de la déformation de la poutre.

Du fait de la structure en treillis du capteur, on peut écrire la relation suivante entre les composantes du torseur à mesurer ($F_x$, $F_y$, $F_z$, $M_x$, $M_y$, $M_z$) et les efforts s'exerçant sur les poutres 8 du capteur ($F_1$, $F_2$, $F_3$, $F_4$, $F_5$, $F_6$) :

$$\begin{bmatrix} F_x \\ F_y \\ F_z \\ M_x \\ M_y \\ M_z \end{bmatrix} = \begin{bmatrix} m_{11} & m_{12} & m_{13} & m_{14} & m_{15} & m_{16} \\ m_{21} & m_{22} & m_{23} & m_{24} & m_{25} & m_{26} \\ m_{31} & m_{32} & m_{33} & m_{34} & m_{35} & m_{36} \\ m_{41} & m_{42} & m_{43} & m_{44} & m_{45} & m_{46} \\ m_{51} & m_{52} & m_{53} & m_{54} & m_{55} & m_{56} \\ m_{61} & m_{62} & m_{63} & m_{64} & m_{65} & m_{66} \end{bmatrix} \cdot \begin{bmatrix} F_1 \\ F_2 \\ F_3 \\ F_4 \\ F_5 \\ F_6 \end{bmatrix}$$

Les efforts $F_1$ à $F_6$ engendrent une déformation des poutres B : $\varepsilon_1$, $\varepsilon_2$, $\varepsilon_3$, $\varepsilon_4$, $\varepsilon_5$, $\varepsilon_6$ que l'on mesure au moyen de capteurs de déformation 12.

La relation entre les efforts $F_1$ à $F_6$ et les déformations $\varepsilon_1$ à $\varepsilon_6$ est :

3

$$\varepsilon i = Ki\,Fi$$

Lorsque les poutres 8 sont identiques, les termes Ki sont identiques.

La relation qui lie les signaux électriques $\mu1$ à $\mu6$ que l'on recueille, aux déformations $\varepsilon1$ à $\varepsilon6$ est :

$$\mu i = Gi\,\varepsilon i$$

Lorsque les jaunes 12 sont identiques, les termes Gi sont identiques. Nous avons par conséquent une relation entre les signaux que l'on recueille et les efforts dans les poutres :

$$\mu i = Gi \times Ki \times Fi$$

soit :

$$Fi = \frac{\mu i}{Gi \times Ki}$$

et donc la relation entre les signaux que l'on recueille et le torseur à mesurer sera :

$$
\begin{bmatrix} Fx \\ Fy \\ Fz \\ Mx \\ My \\ Mz \end{bmatrix}
=
\begin{bmatrix}
q11 & q12 & q13 & q14 & q15 & q16 \\
q21 & q22 & q23 & q24 & q25 & q26 \\
q31 & q32 & q33 & q34 & q35 & q36 \\
q41 & q42 & q43 & q44 & q45 & q46 \\
q51 & q52 & q53 & q54 & q55 & q56 \\
q61 & q62 & q63 & q64 & q65 & q66
\end{bmatrix}
\cdot
\begin{bmatrix} \mu1 \\ \mu2 \\ \mu3 \\ \mu4 \\ \mu5 \\ \mu6 \end{bmatrix}
$$

Les termes qij sont identifiés en soumettant, par exemple, le capteur à des contraintes unitaires suivant chaque composante.

Lorsque le capteur est placé sur un robot, une extrémité est fixée au poignet du robot, et l'autre extrémité au terminal.

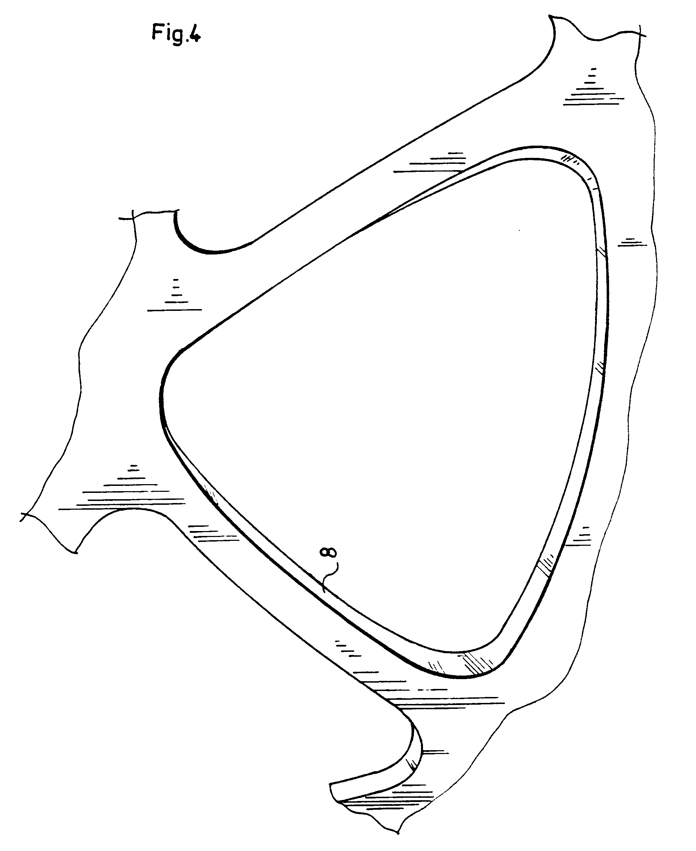

On peut alors utiliser les informations d'efforts délivrées par ce capteur pour piloter le robot. Les signaux analogiques sont convertis en signaux numériques et envoyés au calculateur de commande du robot (figure 3).

## Revendications

1. Procédé de réalisation d'un capteur de mesure de trois composantes de force et trois composantes de moment, qui consiste :

– à usiner, par enlèvement de matière, une pièce mécanique se présentant sous la forme d'un manchon de section transversale de forme générale arrondie, doté d'une paroi périphérique d'une épaisseur donnée, de façon à obtenir, dans un premier temps, un manchon présentant, sur sa plus grande longueur, un tronçon central (7) d'épaisseur inférieure à l'épaisseur initiale, et deux tronçons d'extrémité (1, 2) de même épaisseur que ladite épaisseur initiale,

– à évider dans un deuxième temps le tronçon central (7) de façon à réaliser six poutres (8) reliant les deux tronçons d'extrémité (1, 2) et présentant longitudinalement une forme d'hélice, lesdites poutres étant agencées selon une architecture triangulée fermée,

– et à doter chacune des six poutres (8) de moyens de mesure (12) de leur déformation.

2. Procédé de réalisation d'un capteur de mesure selon la revendication 1, caractérisé en ce que l'on utilise un manchon coudé longitudinalement de façon à obtenir deux tronçons d'extrémité (1, 2) s'étendant selon deux plans sécants.

3. Procédé de réalisation d'un capteur de mesure selon la revendication 1, dans lequel l'on utilise un manchon rectiligne de façon à obtenir deux tronçons d'extrémité (1, 2) parallèles.

4. Capteur de mesure de trois composantes de force et trois composantes de moment obtenu par la mise en oeuvre d'un procédé conforme à l'une des revendications 1 à 3, consitué d'une pièce mécanique d'un seul tenant présentant une section transversale de forme générale arrondie et comportant deux faces d'extrémités (1, 2) aptes à être fixées respectivement sur un corps engendrant forces et moments et sur un corps de référence, et d'une partie centrale (7) composée de six poutres (8) présentant longitudinalement une forme d'hélice, dotées chacune de moyens de mesure (12) des déformations et disposées suivant une architecture triangulée fermée entre les deux faces d'extrémités (1, 2).

5. Capteur de mesure selon la revendication 4, dans lequel les faces d'extrémité (1, 2) sont parallèles.

6. Capteur de mesure selon la revendication 4, caractérisé en ce que les faces d'extrémité (1, 2) s'étendent selon deux plans sécants.

7. Capteur suivant l'une des revendications 4 à 6, dans lequel les poutres (8) définissent un treillis régulier et s'étendent depuis trois zones distinctes d'une des faces d'extrémités (1) du capteur jusqu'à trois zones distinctes de l'autre face d'extrémité (2), décalées axialement de 60° par rapport aux trois zones précitées.

8. Capteur selon l'une des revendications 4 à 7, dans lequel les moyens de mesure de la déformation des poutres (8) sont constitués par des jauges de contrainte (12).

**Claims**

1. Process for making a sensor for measuring three force components and three torque components consisting in :
   – machining, by removal of material, a mechanical unit in the shape of a sleeve of generally rounded cross-section, endowed with a peripheral wall of a given thickness, with a view to obtaining, at a first stage, a sleeve exhibiting, along its major length, a central section (7), the thickness of which is smaller than the initial thickness, and two end sections (1, 2) having the same thickness as said initial thickness,
   – hollowing out, at a second stage, central section (7) with a view to producing six bars (8) linking the two end sections (1, 2) and exhibiting in the longitudinal direction a helical form, said bars being designed in accordance with a closed triangular architecture,
   – and in endowing each of the six bars (8) with means for measuring (12) their deformation.

2. Process for making a measuring sensor according to claim 1, characterised in that use is made of a longitudinally bent sleeve with a view to obtaining two end sections (1, 2) extending along two intersecting planes.

3. Process for making a measuring sensor according to claim 1, in which use is made of a straight sleeve with a view to obtaining two parallel end sections (1, 2).

4. Sensor for measuring three force components and three torque components obtained by carrying out a process according to one of claims 1 to 3, consisting in an integral mechanical unit exhibiting a generally rounded cross-section and comprising two end faces (1, 2) capable of being secured to a body generating forces and torques, on the one hand, and to a reference body, on the other hand, as well as a central section (7) consisting in six bars (8) exhibiting in the longitudinal direction a helical form, each of said bars being endowed with means (12) for measuring deformations and arranged in accordance with a closed triangular architecture between the two end faces (1, 2).

5. Measuring sensor according to claim 4, in which end faces (1, 2) are parallel.

6. Measuring sensor according to claim 4, characterised in that end faces (1, 2) extend along two intersecting planes.

7. Sensor according to one of claims 4 to 6, in which bars (8) define a regular grid extending from three distinct zones of one of the end faces (1) of the sensor to three distinct zones of the other end face (2), these being axially offset by 60° in relation to the three above mentioned zones.

8. Sensor according to one of claims 4 to 7, in which the means for measuring the deformation of bars (8) consist in foil strain gauges (12).

**Patentansprüche**

1. Verfahren zur Herstellung eines Sensors zum Messen von drei Kraftkomponenten und drei Momentkomponenten, bestehend :
   – im Herausarbeiten durch Materialentzug eines mechanischen Teils in der Form einer Hülse mit einem Querschnitt gerundeter Allgemeinform, wobei die besagte Hülse eine Peripheriewand gegebener Dicke umfaßt, um in einer ersten Stufe eine Hülse zu erzielen, die ihrer größeren Länge nach einen mittleren Abschnitt (7) umfaßt, dessen Dicke geringer ist als die anfängliche Dicke, sowie zwei Endabschnitte (1, 2), deren Dicke die gleiche ist wie die Anfangsdicke,

– im Aushöhlen während einer zweiten Stufe des mittleren Abschnitts (7), um sechs Streben (8) herzustellen, die die beiden Endabschnitte (1, 2) miteinander verbinden und in Längsrichtung eine spiralige Form aufweisen, wobei die besagten Streben im Einklang mit einer geschlossenen Dreiecksarchitektur konstruiert sind,

– und im Bestücken jeder der sechs Streben (8) mit Mitteln (12) zum Messen ihrer Verformung.

2. Verfahren zur Herstellung eines Meßsensors nach Anspruch 1, dadurch gekennzeichnet, daß man von einer der Länge nach gekrümmten Hülse Gebrauch macht, um zwei sich in zwei einander schneidenden Ebenen erstreckende Endabschnitte (1, 2) zu erzielen.

3. Verfahren zur Herstellung eines Meßsensors nach Anspruch 1, bei dem man von einer geraden Hülse Gebrauch macht, um zwei parallele Endabschnitte (1, 2) zu erzielen.

4. Sensor zum Messen von drei Kraftkomponenten und drei Momentkomponenten, hergestellt durch die Durchführung eines Verfahrens nach einem der Ansprüche 1 bis 3, bestehend in einem einheitlichen mechanischen Teil mit einem Querschnitt gerundeter Allgemeinform und mit zwei Endflächen (1, 2), die so beschaffen sind, daß sie an einem Kräfte und Momente erzeugenden Körper beziehungsweise einem Bezugskörper angebracht werden können, sowie mit einem mittleren Abschnitt (7), der sich aus sechs in Längsrichtung eine Spiralenform aufweisender Streben (8) zusammensetzt, wobei jede der besagten Streben mit Mitteln (12) zum Messen von Verformungen versehen und im Einklang mit einer geschlossenen Dreiecksarchitektur zwischen den beiden Endflächen (1, 2) angeordnet ist.

5. Meßsensor nach Anspruch 4, bei dem die Endflächen (1, 2) parallel sind.

6. Meßsensor nach Anspruch 4, dadurch gekennzeichnet, daß sich die Endflächen (1, 2) in zwei einander schneidenden Ebenen erstrecken.

7. Sensor nach einem der Ansprüche 4 bis 6, bei dem die Streben (8) ein regelmäßiges Fachwerk bilden und sich von drei getrennten Zonen einer der Endflächen (1) des Sensors aus zu drei getrennten Zonen der anderen Endfläche (2) erstrecken, wobei die besagten Zonen um 60° im Verhältnis zu den vorgenannten drei Zonen versetzt sind.

8. Sensor nach einem der Ansprüche 4 bis 7, bei dem die Mittel zum Messen der Verformung der Streben (8) in Dehnungsmeßstreifen (12) bestehen.

Fig. 1

Fig. 2

Fig. 3

Mesure $\mu^1, \mu^2, \mu^3, \mu^4, \mu^5, \mu^6$

Conversion analogique ⟶ numérique

Calcul Fx Fy Fz Mx My Mz

Pilotage robot

Fig.4